# FASCICULE DE BREVET EUROPEEN

(11) **EP 3 386 621 B1**
(45) Date de publication et mention de la délivrance du brevet: **09.10.2019**
(21) Numéro de dépôt: 16809764.0
(22) Date de dépôt: 07.12.2016
(51) Int. Cl.: B29B 17/04, B01J 3/00, B29B 9/12, B29K 21/00, B29B 7/74, B29B 7/40

(54) **PROCEDE DE FABRICATION DE POUDRETTE DE CAOUTCHOUC**
VERFAHREN ZUR HERSTELLUNG VON KAUTSCHUKGRANULAT
METHOD FOR PRODUCING RUBBER CRUMB

(30) Priorité: 09.12.2015 FR 1562084
(43) Date de publication de la demande: 17.10.2018
(73) Titulaire: Compagnie Générale des Etablissements Michelin, 63000 Clermont-Ferrand (FR); Association pour la Recherche et le Développement des Méthodes et Processus Industriels (ARMINES), 75272 Paris Cedex 06 (FR)
(72) Inventeur: MERINO LOPEZ, Jose, 63040 Clermont-Ferrand Cedex 9 (FR); PIALOT, Frédéric, 63040 Clermont-Ferrand Cedex 9 (FR); COSTE, Nathalie, 63040 Clermont-Ferrand Cedex 9 (FR); LETOURNEAU, Jean-Jacques, 31380 Gragnague (FR); FAGES, Jacques, 81000 Albi (FR); SAUCEAU, Martial, 81 000 Albi (FR)
(74) Mandataire: Wroblewski, Nicolas Paul André
(86) Numéro de dépôt international: PCT/EP2016/080148
(87) Numéro de publication internationale: WO 2017/097859

(56) Documents cités:
- EP-A1- 1 569 522
- DE-A1- 2 541 771
- DE-C1- 19 543 914
- US-A- 3 319 895
- US-B1- 6 426 136

## Description

L'invention concerne la fabrication de poudrette de caoutchouc (en anglais « rubber crumb ») à partir de matériaux caoutchoutiques usagés et son utilisation dans la fabrication de pneumatiques.

Le recyclage des matériaux caoutchoutiques en fin de vie, plus particulièrement celui des pneumatiques usagés constitue un enjeu industriel majeur. La valorisation des pneumatiques usagés est actuellement principalement énergétique, mais la réutilisation du caoutchouc vulcanisé peut conduire à d'importantes économies de matière. La matière ainsi réutilisée est sous forme de poudrette de caoutchouc.

Les poudrettes de caoutchouc sont des granulés, de préférence des microparticules ayant des dimensions inférieures à 1mm. Elles sont généralement obtenues par broyage de pneumatiques usagés et sont typiquement utilisées comme matériau de remplissage dans des compositions de caoutchouc, notamment pour pneumatique.

On connaît différents procédés d'obtention de poudrette de caoutchouc à partir de pneumatiques usagés déchiquetés.

Parmi ces procédés on rappelle le broyage cryogénique, tel que décrit dans le document WO-2005/049656. Ainsi, après avoir retiré le métal et les fibres, les fragments de pneumatiques sont refroidis à l'aide de l'azote liquide pour les ramener en dessous de la température de transition vitreuse du caoutchouc avant d'être finement broyés. Outre les nombreuses étapes de séparation et broyage, un tel procédé nécessite une grande quantité d'azote liquide pour traiter le caoutchouc et s'avère de ce fait cher et consommateur d'énergie.

Un autre exemple de broyage de fragments de caoutchouc est décrit dans le document EP-2471642 dans lequel on réalise une micronisation des particules de caoutchouc en les faisant passer entre deux disques tronconiques rotatifs, l'un des disques étant, de plus, oscillant. Ce procédé fournit toutefois des particules assez grossières, les particules obtenues ayant une valeur moyenne de leurs dimensions d'environ 425µm, pour en rendement énergétique assez faible.

Or, il a été constaté que les propriétés des compositions de caoutchouc utilisant une poudrette de remplissage s'améliorent avec la diminution de la taille de ces particules. Par ailleurs, la quantité de poudrette de remplissage qui peut être rajoutée au mélange de base, sans altérer les propriétés de celui-ci, augmente avec la diminution de la taille de ces particules. Ainsi, afin de réduire le coût de matières qui constituent un pneu et, par voie de conséquent, le prix du pneumatique, il est nécessaire d'obtenir en grande quantité des particules de poudrette de caoutchouc de très petite taille.

Dans cet objectif, le document US-6680110 propose l'utilisation du dioxyde de carbone supercritique qui est apte à pénétrer à l'intérieur des particules de caoutchouc, notamment en lui rajoutant des additifs, tels des tensioactifs pour favoriser le trempage. Le dioxyde de carbone à l'état supercritique est mis au contact avec les particules de caoutchouc le temps nécessaire au gonflement des particules à haute pression et ensuite la pression est descendue brutalement pour provoquer l'explosion de ces particules. On obtient ainsi des particules de poudrette de dimensions plus faibles, leur dimension moyenne étant d'environ 180µm, mais, outre le temps de trempage qui est assez long, ce procédé fait également usage d'additifs.

L'invention a pour objectif de pallier au moins l'un des inconvénients des procédés d'obtention de poudrette de caoutchouc qui viennent d'être décrits et de proposer un procédé permettant d'obtenir une poudrette d'une granulométrie encore plus fine.

À cet effet, l'invention propose un procédé de fabrication de poudrette de caoutchouc selon la revendication 1, comportant les étapes suivantes :
a) mettre en suspension des granulés de caoutchouc ayant une taille donnée dans un autoclave contenant un fluide à l'état supercritique sous pression ;
b) agiter le mélange pendant une durée prédéterminée ;
c) réaliser une détente isenthalpique du mélange de l'étape b) en le pulvérisant à travers une buse.

Les poudrettes de caoutchouc (en anglais « rubber crumbs ») sont généralement obtenues à partir du broyage de pneumatiques usagés. Elles se présentent généralement sous forme de granulés dont la taille est de quelques centaines de micromètres. Elles comprennent tous les constituants qui entrent dans une formulation d'une composition pour pneumatique, comme par exemple les élastomères notamment diéniques, les charges renforçantes, les charges non renforçantes, les plastifiants, les additifs de vulcanisation, les agents de protection. Les poudrettes de caoutchouc comprennent aussi les produits formés par les réactions que subissent ces constituants au cours des différentes étapes de fabrication de la composition du pneumatique, notamment au cours de l'étape de vulcanisation, et au cours de la vie du pneumatique.

Les poudrettes de caoutchouc (en anglais « rubber crumbs ») sont des granulés. La poudrette de caoutchouc est constituée d'une composition de caoutchouc réticulée à base d'un élastomère et d'une charge.

Un fluide dont la température est portée au-delà de sa température critique et dont la pression est supérieure à celle de sa pression critique est appelé dans ce qui suit, fluide supercritique. Un fluide supercritique présente un comportement et des propriétés intermédiaires entre l'état de gaz et l'état de fluide, il est donc dense et compressible. De ce fait, il présente plusieurs avantages : il a un assez bon pouvoir solvant qui est réglable en ajustant les paramètres de pression et/ou de température du fluide, et il constitue un bon agent de transport de particules.

Selon l'invention, on agite le mélange pendant une durée prédéterminée à pression et température constantes afin d'atteindre l'équilibre thermodynamique du mélange à l'intérieur de l'autoclave. Ensuite, on réalise une détente brutale du mélange en le faisant passer à travers une buse d'atomisation. Par brutale on comprend une détente où le mélange au passage de la buse atteint une vitesse de l'ordre de 100 mètres par seconde et dans tous les cas supérieure à 10 mètres par seconde. C'est la différence de pression entre l'amont et l'aval de la buse qui provoque cette détente. Comme par ailleurs cette buse est isolée thermiquement pour éviter tout échange thermique du mélange avec le milieu extérieur, la détente est isenthalpique. Cette détente provoque une chute de température du fluide par effet Joule-Thomson et donc une chute de température des particules convoyées qui traversent la buse. La température des particules descend en dessous de la température de transition vitreuse (Tg) du caoutchouc.

La température de transition vitreuse Tg du caoutchouc, où par caoutchouc on comprend un mélange élastomérique comportant un polymère élastomère et au moins une charge, est une caractéristique physique usuelle et intrinsèque du matériau. La température de transition vitreuse est la température à laquelle le mélange élastomérique passe d'un état caoutchouteux déformable à un état vitreux rigide. La température de transition vitreuse Tg d'un mélange élastomérique est généralement déterminée lors de la mesure des propriétés dynamiques du mélange élastomérique, sur un viscoanalyseur (Metravib VA4000), selon la norme ASTM D 5992-96. La mesure des propriétés dynamiques est réalisée sur un échantillon de mélange élastomérique vulcanisé, c'est dire cuit jusqu'à un taux de conversion d'au moins 90%, l'échantillon ayant la forme d'une éprouvette cylindrique ayant une épaisseur égale à 2 mm et une section égale à 78,5 mm². On enregistre la réponse de l'échantillon de mélange élastomérique à une sollicitation sinusoïdale en cisaillement simple alterné, ayant une amplitude crête-crête égale à 0,7MPa et une fréquence égale à 10 Hz. On effectue un balayage en température à vitesse de montée en température constante de +1.5°C/min. Les résultats exploités sont généralement le module complexe de cisaillement dynamique G*, comprenant une partie élastique G' et une partie visqueuse G", la perte dynamique tgδ, égale au rapport G'/G" et la partie visqueuse du module de cisaillement G". La température de transition vitreuse Tg est la température à laquelle la partie visqueuse du module de cisaillement G" atteint un maximum lors du balayage en température.

La température de transition vitreuse des mélanges élastomériques réticulés utilisés dans la fabrication des pneumatiques est comprise entre -75°C et -5°C à 10 Hz. Ainsi, les particules de caoutchouc réticulé dont la température au moment du passage à travers la buse d'atomisation est sensiblement égale à la température de transition vitreuse, s'étirent et se cassent facilement lors du passage à travers la buse, faisant que leur taille se trouve ensuite réduite. De surcroît, lors de la pulvérisation, les particules sont sollicitées à haute fréquence ce qui produit une rigidification dynamique des particules. En effet, il a été établi que dans le cas des essais périodiques, l'effet de la fréquence de sollicitation sur les grandeurs viscoélastiques d'un polymère ou mélanges de polymères est inverse à celui de la température, ce qui est connu comme le principe d'équivalence temps-température. La relation empirique William Landel Ferry (loi WLF) associée au principe d'équivalence temps-température permet de rendre compte des variations de la viscosité limite des polymères pour des températures proches de la température de transition vitreuse Tg. De ce fait, une augmentation de la fréquence de sollicitation des particules de caoutchouc a un même effet sur leur comportement qu'une chute de leur température. Ainsi, le passage à travers la buse d'atomisation équivaut à une chute de température jusqu'à environ -100°C (une chute d'environ 30°C étant due à l'effet d'équivalent en température lié à WLF), ce qui rend leur comportement très cassant et permet leur fragmentation lors du passage à travers la buse d'atomisation.

Dans un mode de réalisation de l'invention, le procédé comprend après l'étape c) une étape d) dans laquelle on sépare les particules de poudrette de caoutchouc du fluide supercritique. Dans ce mode de réalisation le fluide supercritique se trouve à l'état de glace à l'étape c) et une étape supplémentaire de séparation des deux solides est effectuée.

Avantageusement, les granulés de l'étape a) ont une taille égale ou inférieure à 2mm.

De préférence, la détente a lieu dans un récipient de collecte situé à pression atmosphérique.

Avantageusement, l'étape c) a lieu dans un récipient de collecte muni d'un sac filtrant. Ceci permet à collecter la poudrette broyée et à la séparer le dioxyde de carbone.

De préférence, ledit fluide supercritique est le dioxyde de carbone.

On pourrait utiliser comme fluide supercritique : le diazote, ou le dioxyde de carbone. On préfère ce dernier car il est facile à obtenir, de manière économique, sa température critique étant de 31,1°C et sa pression critique de 7,4 MPa. Par ailleurs, il est non-inflammable, non toxique, il est relativement peu cher et se prête facilement à la récupération et au recyclage.

Avantageusement, les granulés de caoutchouc sont mélangées avec le fluide supercritique pour donner un mélange ayant une teneur en poudrette allant jusqu'à 50% en volume.

De préférence, lors de l'étape b) la pression est comprise entre 10 MPa et et 30 MPa, et supérieure à la pression critique du fluide. Dans un exemple préféré de réalisation de l'invention, la pression à l'étape c) est d'environ 14 MPa et la température d'environ 50 °C.

Avantageusement, lors de l'étape c) on maintient la pression dans l'autoclave entre 10 à 20 MPa pour maintenir une détente brutale du mélange.

De préférence, le fluide supercritique sortant du récipient de collecte est réutilisé pour fabriquer de la poudrette de caoutchouc. Le fluide est récupéré, il est détendu, purifié et refroidi pour passer à l'état liquide, ensuite il est pompé et compressé pour être ramené à l'état supercritique puis réinjecté dans l'autoclave, pour obtenir un procédé encore plus économique.

Avantageusement, on utilise de la poudrette obtenue à l'étape c) à la place des granulés de l'étape a). On applique ensuite le traitement à la poudrette fine pour réduire encore plus sa taille.

Les particules obtenues avec le procédé de l'invention sont utilisées dans une composition de caoutchouc pour pneumatique.

D'autres caractéristiques et avantages de l'invention apparaîtront dans la description qui va suivre. Cette description se réfère aux dessins joints en annexe et sur lesquels :
- la figure 1 représente un diagramme de canalisation et d'instrumentation d'une installation de mise en oeuvre du procédé de l'invention ;
- la figure 2 illustre le diagramme de phase du dioxyde de carbone utilisé avec le procédé de l'invention ;
- la figure 3 illustre un diagramme de distribution en nombre de la taille des particules obtenues avec le procédé de l'invention.

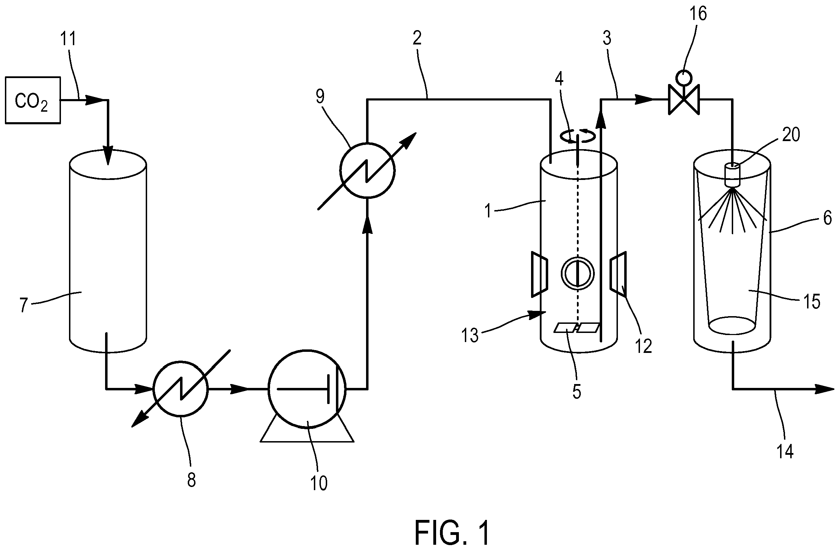

Le diagramme de la figure 1 illustre schématiquement une installation de mise en oeuvre du procédé de l'invention. Le fluide supercritique utilisé est du dioxyde de carbone.

Le dioxyde de carbone à l'état liquide arrive par un conduit 11 en provenance d'un réservoir où il se trouve à l'état d'équilibre liquide-vapeur, est stocké dans un réservoir 7 à une pression d'environ 5 MPa. Il est mis en circulation au sein de l'installation par une pompe 10. À titre d'exemple, la pompe 10 est du type à membrane et apte à fournir un débit maximum d'environ 35 kg/hr. Le dioxyde de carbone en provenance du réservoir 7 passe à travers un condenseur 8 avant d'être aspiré par la pompe 10. Le condenseur 8 permet de sous refroidir le liquide avant son arrivée dans la pompe 10 pour éviter toute apparition de gaz dans la pompe 10. Le dioxyde de carbone comprimé à une pression d'environ 10 MPa et inférieure à 35 MPa, et passe ensuite dans un échangeur de chaleur 9 qui élève sa température à environ 315 K et supérieure à la température critique du fluide. En sortie de l'échangeur 9 le fluide est supercritique.

Un autoclave 1 de mélange reçoit une quantité prédéterminée de granulés de caoutchouc. Les granulés de caoutchouc introduites dans l'autoclave 1 ont été obtenues par un broyage préalable et ont une taille D50 (en nombre) comprise entre 20 et 200 µm. L'autoclave est prévu dans ce but avec une ouverture fermée de manière étanche par un couvercle (non visible sur les dessins. Des hublots 12 qui permettent de visualiser l'intérieur de l'autoclave. Un conduit d'arrivée 2 dans le réservoir permet d'y introduire le fluide à l'état supercritique. Les granulés de caoutchouc sont mélangés avec le fluide supercritique pour donner un mélange ayant une teneur en poudre allant jusqu'à 50% en volume.

Un conduit de sortie 3 permet la sortie du mélange formé par les granulés de caoutchouc 13 (dont la présence est indiquée par une flèche sur la fig. 1) et le fluide supercritique en direction d'une vanne 16 le reliant à un réservoir collecteur 6. Un agitateur 4 à pales de mélangeage 5 est prévu à l'intérieur de l'autoclave de mélange 1 et permet d'uniformiser la dispersion des granules de caoutchouc dans le fluide. L'agitateur 4 est de préférence du type magnétique et entraîne les pales de l'agitateur dans le sens des flèches sur le diagramme de la fig. 1. L'autoclave 1 est muni de fenêtres à saphir 12 à travers lesquelles on peut observer l'état du mélange.

Lorsque la vanne 16 installée en sortie d'autoclave est ouverte, le mélange de fluide supercritique et de granulés de poudrette qui sort par le conduit 3 est pulvérisé à l'aide d'une buse 20 dans un réservoir de poudrette 6. La buse 20 est isolée thermiquement afin d'éviter tout échange de chaleur avec le milieu extérieur. La poudrette obtenue est collectée à l'intérieur d'un sac 15 poreux réalisé dans des fibres de PTFE. Le fluide, le dioxyde de carbone dans ce cas, quitte le réservoir 6 par un conduit de sortie 14 et il est libéré dans l'atmosphère. Dans une variante de l'invention, on recycle le dioxyde de carbone sortant en le captant à la sortie pour le détendre, le purifier et le refroidir pour passer à l'état liquide et on l'introduit à nouveau dans l'installation de l'invention.

On va expliquer dans ce qui suit le procédé d'obtention de particules de poudrette de caoutchouc avec l'installation de l'invention.

Les granulés de caoutchouc ayant un diamètre moyen égal ou inférieur à 200µm sont introduites dans l'autoclave de mélange 1. La vanne 16 est fermée. On injecte ensuite du dioxyde de carbone à l'état supercritique à l'intérieur de l'autoclave 1 jusqu'à une valeur de la pression d'environ 21 MPa. On met ensuite en marche l'agitateur 4 à une vitesse d'environ 500 tr/min pour une durée d'environ 10 min dans des conditions préétablies et constantes de pression et de température. Cela permet de s'assurer que les granulés de caoutchouc sont bien dispersées dans le fluide supercritique et aussi que le dioxyde de carbone et les granules de caoutchouc ont interagi, ce dernier agissant à ce stade en tant que solvant pour éliminer les impuretés (telles les huiles) situées sur la surface des granules de caoutchouc. Les conditions de température à l'intérieur de l'autoclave, ainsi que celles de vitesse et de durée de l'agitation sont gérées par une unité de contrôle (non représentée).

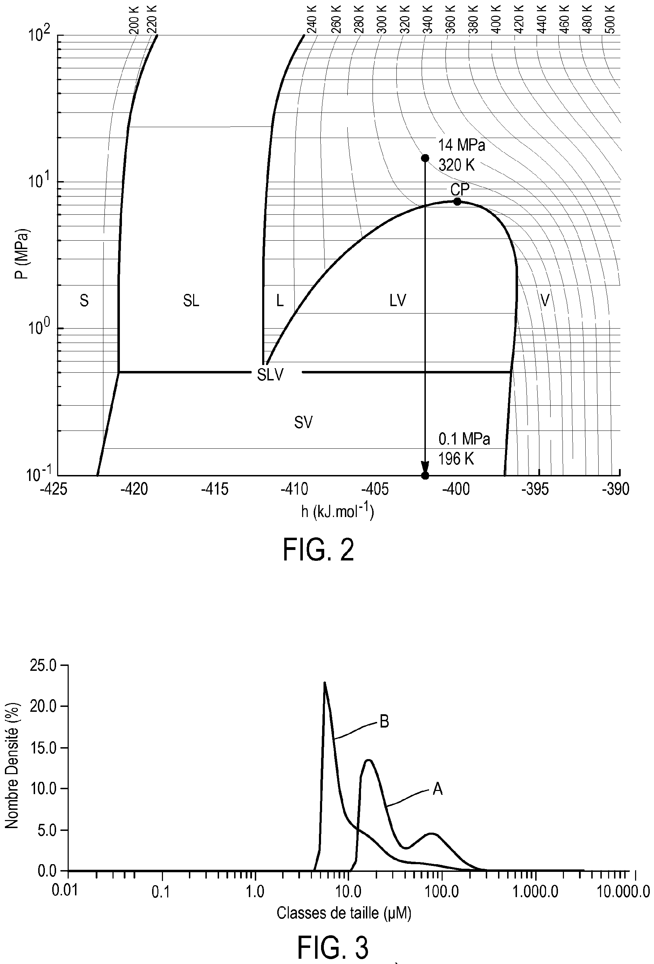

On ouvre ensuite la vanne 16 afin de permettre la sortie du mélange de l'autoclave 1 en direction de la buse de pulvérisation 20. Ceci a pour effet de faire chuter brusquement la pression dans l'autoclave. En parallèle, on s'arrange pour augmenter le débit de la pompe 10 afin de compenser la chute de pression dans l'autoclave 1. On vise à garder une pression sensiblement constante à l'intérieur de l'autoclave 1 lors de la pulvérisation du mélange via la buse d'atomisation 20 afin d'obtenir une chute de pression au niveau de la buse suffisante pour atteindre l'effet escompté. Cette pression est d'environ 14 MPa, ou plus généralement comprise entre 10 et 20 MPa pendant la pulvérisation. La pulvérisation se fait à une vitesse d'environ 100 m/s pour une durée d'environ 1 à 2 min. Lors de la pulvérisation, la pression dans le réservoir de collecte 6 est égale à la pression atmosphérique. Cette pression étant inférieure à 0,5 MPa, qui est la pression du point triple du dioxyde de carbone, il y apparition de glace carbonique lors de la pulvérisation et la température d'équilibre solide-vapeur est alors d'environ -77°C (fig. 2), Le sac 15, qui a un seuil de coupure de 5 µm, se remplit rapidement de particules de poudrette et de glace carbonique. Le sac est ensuite vidé pour récupérer la poudrette.

Dans l'exemple décrit, la buse d'atomisation 20 est du type SK-MFP et SK Series de la société Spraying Systems Co® et a un diamètre nominal (on comprend le diamètre interne de l'orifice de pulvérisation) compris entre 340 et 400µm.

La figure 2 illustre le diagramme de phase du dioxyde de carbone pur en coordonnées enthalpie-pression. Pendant la détente, le dioxyde de carbone subit un changement notable. En amont de la buse 20, le dioxyde de carbone se présente comme fluide supercritique à une pression de 14 MPa et une température de 320K. La détente est isenthalpique, car on n'apporte ni puissance utile ni apport de chaleur avec l'extérieur. Ainsi, cette détente se matérialise pour le dioxyde de carbone par une verticale dans le diagramme. La pression en sortie est de 0,1 MPa. On constate qu'en partant de ce point il y a génération de glace carbonique et la température de sortie chute à 196K.

Dans une variante, on peut réaliser la détente à une température plus élevée afin d'éviter la formation de glace carbonique. Ainsi, on établit en amont de la buse 20, la pression du dioxyde de carbone à 14 MPa et sa température à environ 355K pour obtenir alors en sortie une température d'environ 200K.

Le graphique de la figure 3 illustre la distribution en nombre de la taille (par taille on comprend le diamètre de sphère équivalente d'une particule) des particules obtenues avec le procédé de l'invention. La courbe A illustre une distribution en nombre des particules pour lesquelles la médiane D50 est de 24µm et la courbe B illustre la même distribution pour D50 égal à environ 8 µm. Les autres valeurs de la distribution sont visibles dans le tableau ci-dessous :

| | Numéro d'enregistrement: | Nom de l'échantillon | Dx (10) (µM) | Dx (50) (µM) | Dx (90) (µM) | D [4 ,3] (µM) | D [3,2] (µM) | Span (largeur de distribution) |
|---|---|---|---|---|---|---|---|---|
| Moyenne 1xEcart type 1xRSD | 81 | A | 14.4 | 23.7 | 102 | 154 | 122 | 3.680 |
| | 85 | B | 5.51 | 7.70 | 27.5 | 142 | 96.6 | 2.852 |
| | | | 9.95 | 15.7 | 64.5 | 148 | 109 | 3.266 |
| | | | 6.27 | 11.3 | 52.3 | 8.92 | 18.0 | 0.585 |
| | | | 63.1 | 72.0 | 81.2 | 6.02 | 16.5 | 17.919 |

Le procédé a permis de passer d'une distribution illustrée par la courbe A vers celle de la courbe B. La taille est ici exprimée en terme de diamètre médian ou médiane D50 qui représente le diamètre pour lequel 50% en nombre des particules de la poudre ont un diamètre supérieur (ou de manière équivalente, inférieur) à cette valeur.

L'étude granulométrique démontre que le procédé de l'invention a conduit de manière surprenante à une diminution importante de la taille des particules : la distribution granulométrique exprimée en nombre fait apparaître un net décalage du pic principal vers les fines particules (le diamètre médian exprimé en nombre passe de 24,1 sur la courbe A à 7,7 µm sur la courbe B). Les images prises à l'aide d'un microscope électronique de type MEB confirment que la taille des particules est 1 fois et demie à 2 fois plus petite après leur traitement avec le procédé de l'invention.

La baisse de la taille des particules est due principalement à des contraintes mécaniques qu'elles subissent lors du passage à travers la buse. Le passage rapide à travers un orifice calibré provoque un étirement de la particule de caoutchouc qui est en dessous de la température de transition vitreuse du caoutchouc et se casse facilement. De plus, le fort refroidissement engendré par la brusque chute de la température au passage de la buse est de nature à favoriser un cryobroyage par chocs entre les particules. L'effet cumulé de ces deux phénomènes fait que la taille des particules de poudrette de caoutchouc récoltée dans le sac 15 est significativement réduite par rapport à celle initiale des granulés de caoutchouc. De surcroît, le dioxyde de carbone a agi en tant que solvant des substances organiques qui entouraient les granulés de caoutchouc pendant l'étape b) de mise en contact et agitation du mélange. De ce fait, la poudrette obtenue est exempte de toute matière organique en surface et est une poudrette sèche. Les particules de poudrette ainsi obtenues ne forment pas d'agglomérats et la poudrette se mélange facilement à la composition élastomère d'un pneu neuf.

Dans un exemple de réalisation de l'invention, on a utilisé une quantité de 100g de poudrette de caoutchouc, les granulés introduits dans l'autoclave 1 avaient une taille d'environ D50 de 24µm. On a rajouté du dioxyde de carbone supercritique pour obtenir un mélange ayant 20 à 30% en volume de poudre. Le mélange a été mis en agitation pour une durée de 10 min à une vitesse de 500 tr/min, à une pression de 21 MPa et à une température de 50°C. Ensuite, on a ouvert la vanne 16 et on a pulvérisé le mélange à travers une buse 20 qui est une buse SK-MFP de la société Spraying Systems Co® dont le diamètre de l'orifice de pulvérisation est de de 340µm, l'angle de pulvérisation de 51°, isolée thermiquement dans un récipient situé à la pression atmosphérique. Après 90 secondes de pulvérisation, on a obtenu une poudrette sèche de particules de caoutchouc d'une taille dont la répartition est telle décrite dans ce qui suit en référence à la figure 3 dans le sac 15.

La taille des particules de poudrette dépend de la pression et de la température lors du passage à travers la buse d'atomisation, ainsi que du diamètre et de la forme de cette buse.

D'autres variantes de l'invention peuvent être envisagées sans sortir du cadre de ces revendications. Ainsi, on peut réaliser une micronisation en cascade en faisant passer les poudrettes par plusieurs buses successivement, la taille de l'orifice de pulvérisation des buses pouvant être réduite progressivement.

## Revendications

1. Procédé de fabrication de poudrette de caoutchouc comportant les étapes suivantes :
a) mettre en suspension des granulés de caoutchouc ayant une taille donnée dans un autoclave (1) contenant un fluide supercritique ;
b) agiter le mélange pendant une durée prédéterminée à pression et température constantes ;
c) réaliser une détente isenthalpique du mélange de l'étape b) en le pulvérisant à travers une buse (20).

2. Procédé selon la revendication 1, **caractérisé en ce qu'**il comprend après l'étape c) une étape d) dans laquelle on sépare les particules de poudrette de caoutchouc du fluide supercritique.

3. Procédé selon l'une des revendications 1 ou 2, **caractérisé en ce que** les granulés de l'étape a) ont une taille égale ou inférieure à 2mm.

4. Procédé selon l'une des revendications précédentes, **caractérisé en ce que** la détente a lieu dans un récipient de collecte (6) situé à pression atmosphérique.

5. Procédé selon l'une des revendications précédentes, **caractérisé en ce que** l'étape c) a lieu dans un récipient de collecte (6) muni d'un sac filtrant (15).

6. Procédé selon l'une des revendications précédentes, **caractérisé en ce que** les granulés de caoutchouc sont mélangés avec le fluide supercritique pour donner un mélange ayant une teneur en poudrette allant jusqu'à 50% en volume.

7. Procédé selon l'une des revendications précédentes, **caractérisé en ce que** ledit fluide supercritique est le dioxyde de carbone.

8. Procédé selon la revendication 7, **caractérisé en ce que** lors de l'étape b) la pression est comprise entre 10 MPa et et 30 MPa, et supérieure à la pression critique du fluide.

9. Procédé selon l'une des revendications 7 ou 8, **caractérisé en ce que**, lors de l'étape c) on maintient la pression dans l'autoclave à une valeur comprise entre 10 à 20 MPa.

10. Procédé selon l'une des revendications précédentes, **caractérisé en ce que** le fluide supercritique sortant du récipient de collecte (6) est réutilisé pour fabriquer de la poudrette de caoutchouc.

11. Procédé selon l'une des revendications précédentes, **caractérisé en ce que** l'on utilise de la poudrette obtenue à l'étape c) à la place des granulés de l'étape a).

12. Procédé de fabrication d'une composition de caoutchouc pour pneumatique **caractérisé en ce que** l'on fabrique des particules de poudrette de caoutchouc par un procédé selon l'une des revendications 1 à 11 puis l'on utilise lesdites particules de poudrette de caoutchouc dans ladite composition de caoutchouc.

13. Procédé de fabrication d'une composition de caoutchouc selon la revendication 12 **caractérisé en ce que** les particules de poudrette de caoutchouc ont une dimension inférieure à 30 µm.

14. Procédé de fabrication d'un pneumatique **caractérisé en ce que** l'on fabrique une composition de caoutchouc selon le procédé des revendications 12 ou 13 et l'on utilise ladite composition de caoutchouc pour fabriquer un pneumatique.

## Patentansprüche

1. Verfahren zur Herstellung von Kautschukgranulat, das die folgenden Schritte aufweist:
a) Suspendieren von Kautschukkörnchen von gegebener Größe in einem Autoklaven (1), der ein überkritisches Fluid enthält;
b) Bewegen der Mischung während einer vorbestimmten Dauer bei konstantem Druck und konstanter Temperatur;
c) Herstellen einer isenthalpen Expansion der Mischung des Schritts b) durch ihr Zerstäuben durch eine Düse (20).

2. Verfahren nach Anspruch 1, **dadurch gekennzeichnet, dass** es nach dem Schritt c) einen Schritt d) enthält, in dem die Kautschukgranulatteilchen vom überkritischen Fluid getrennt werden.

3. Verfahren nach einem der Ansprüche 1 oder 2, **dadurch gekennzeichnet, dass** die Körnchen des Schritts a) eine Größe gleich oder kleiner als 2 mm haben.

4. Verfahren nach einem der vorhergehenden Ansprüche, **dadurch gekennzeichnet, dass** die Expansion in einem auf Atmosphärendruck befindlichen Sammelbehälter (6) stattfindet.

5. Verfahren nach einem der vorhergehenden Ansprüche, **dadurch gekennzeichnet, dass** der Schritt c) in einem mit einem Filtersack (15) versehenen Sammelbehälter (6) stattfindet.

6. Verfahren nach einem der vorhergehenden Ansprüche, **dadurch gekennzeichnet, dass** die Kautschukkörnchen mit dem überkritischen Fluid gemischt werden, um eine Mischung zu ergeben, die einen Granulatgehalt hat, der bis zu 50 Volumenprozent geht.

7. Verfahren nach einem der vorhergehenden Ansprüche, **dadurch gekennzeichnet, dass** das überkritische Fluid Kohlendioxyd ist.

8. Verfahren nach Anspruch 7, **dadurch gekennzeichnet, dass** im Schritt b) der Druck zwischen 10 MPa und 30 MPa liegt und höher ist als der kritische Druck des Fluids.

9. Verfahren nach einem der Ansprüche 7 oder 8, **dadurch gekennzeichnet, dass** im Schritt c) der Druck im Autoklaven auf einem Wert zwischen 10 und 20 MPa gehalten wird.

10. Verfahren nach einem der vorhergehenden Ansprüche, **dadurch gekennzeichnet, dass** das aus dem Sammelbehälter (6) austretende überkritische Fluid wiederverwendet wird, um Kautschukgranulat herzustellen.

11. Verfahren nach einem der vorhergehenden Ansprüche, **dadurch gekennzeichnet, dass** das im Schritt c) erhaltene Granulat anstelle der Körnchen des Schritts a) verwendet wird.

12. Verfahren zur Herstellung einer Kautschukzusammensetzung für Luftreifen, **dadurch gekennzeichnet, dass** Kautschukgranulatteilchen durch ein Verfahren nach einem der Ansprüche 1 bis 11 hergestellt und dann die Kautschukgranulatteilchen in der Kautschukzusammensetzung verwendet werden.

13. Verfahren zur Herstellung einer Kautschukzusammensetzung nach Anspruch 12, **dadurch gekennzeichnet, dass** die Kautschukgranulatteilchen eine Abmessung von weniger als 30 µm haben.

14. Verfahren zur Herstellung eines Luftreifens, **dadurch gekennzeichnet, dass** eine Kautschukzusammensetzung nach dem Verfahren der Ansprüche 12 oder 13 hergestellt und die Kautschukzusammensetzung verwendet wird, um einen Luftreifen herzustellen.

## Claims

1. Process for manufacturing rubber crumb comprising the following steps:
a) suspending rubber granules having a given size in an autoclave (1) containing a supercritical fluid;
b) agitating the mixture for a predetermined time at constant pressure and constant temperature;
c) carrying out an isenthalpic expansion of the mixture from step b) by spraying it through a nozzle (20).

2. Process according to Claim 1, **characterized in that** it comprises, after step c), a step d) in which the rubber crumb particles are separated from the supercritical fluid.

3. Process according to either of Claims 1 and 2, **characterized in that** the granules from step a) have a size equal to or less than 2 mm.

4. Process according to one of the preceding claims, **characterized in that** the expansion takes place in a collection container (6) that is at atmospheric pressure.

5. Process according to one of the preceding claims, **characterized in that** step c) takes place in a collection container (6) equipped with a filter bag (15).

6. Process according to one of the preceding claims, **characterized in that** the rubber granules are mixed with the supercritical fluid to give a mixture having a crumb content ranging up to 50% by volume.

7. Process according to one of the preceding claims, **characterized in that** said supercritical fluid is carbon dioxide.

8. Process according to Claim 7, **characterized in that** during step b) the pressure is between 10 MPa and 30 MPa, and above the critical pressure of the fluid.

9. Process according to either of Claims 7 and 8, **characterized in that**, during step c), the pressure in the autoclave is maintained at a value of between 10 and 20 MPa.

10. Process according to one of the preceding claims, **characterized in that** the supercritical fluid leaving the collection container (6) is reused for manufacturing rubber crumb.

11. Process according to one of the preceding claims, **characterized in that** the crumb obtained in step c) is used instead of the granules in step a).

12. Process for manufacturing a rubber composition for a tyre, **characterized in that** rubber crumb particles are manufactured by a process according to one of Claims 1 to 11 then said rubber crumb particles are used in said rubber composition.

13. Process for manufacturing a rubber composition according to Claim 12, **characterized in that** the rubber crumb particles have a dimension of less than 30 µm.

14. Process for manufacturing a tyre, **characterized in that** a rubber composition is manufactured according to the process of Claim 12 or 13 and said rubber composition is used to manufacture a tyre.
